# EUROPEAN PATENT APPLICATION

(11) **EP 1 657 334 A1**
(43) Date of publication of application: **17.05.2006**
(21) Application number: 05256990.2
(22) Date of filing: 11.11.2005
(51) Int. Cl.: D04H 3/02, D04H 3/16, D04H 3/14, D04H 13/00, D06M 17/00, B32B 5/26, A61L 15/22, B29C 70/16, D06N 7/00, B68G 7/00

(54) **Fabric**

(30) Priority: 13.11.2004 GB 0425124
(71) Applicant: DON & LOW LIMITED, Forfar, Angus DD8 1FR (GB)
(72) Inventor: Avril, David, Don & Low Limited, Angus DD8 1FR (GB); Simpson, George, Don & Low Limited, Angus DD8 1FR (GB)
(74) Representative: Moreland, David

(57) **Abstract**

There is disclosed a microfilamentous polymeric fabric (20) and products made from such fabric (20), such as garments and construction products. Several types of fabric are known, e.g. spunlaid webs, meltblown webs, and flashspun webs. Such products suffer from a number of problems. Accordingly the invention provides a "microfilamentous" polymeric fabric (20) having a weight of greater than around 15 g/m², microfilaments (30) of the fabric (20) having a yarn count linear density of around 1.5 dtex or less. In a preferred implementation the microfilaments (30) are melt extruded and are made substantially from polypropylene, and the fabric (20) is intermittently thermally bonded (23) and has a weight of greater than around 30 g/m².

## Description

### FIELD OF INVENTION

The present invention relates to fabrics, particularly microfilamentous polymeric fabric, and more particularly, though not exclusively, protection products made from such fabric, e.g. garments such as workwear garments.

### BACKGROUND TO INVENTION

Several methods are known for making sheet materials. Three of the known methods are spinlaying, meltblowing and flashspinning, which provide correspondingly named products, these being termed spunlaid web, meltblown web and flashspun web.

The spinlaying method provides a sheet of continuous filaments as a spunlaid web in which the filament thickness or diameter is in the region of around 20 µm. The filaments are formed by extrusion of molten polymer through a spinneret, i.e. melt extrusion. The filaments of the spunlaid web can be subsequently bonded together by any suitable technique (e.g. intermittent thermal calender bonding) to provide fabric integrity, and such results in a product known as a spunlaid nonwoven web or fabric or spunbonded web or fabric.

The meltblowing method provides a meltblown web in which the filaments are not continuous, and form discontinuous fibres which are laid down as a microfibre web. This method provides the fibres by extrusion of molten polymer through a spinneret into a high velocity hot gas stream which causes the filament strands to stretch and break, resulting in discontinuous polymer strands, which are provided as individual fibres. The fibres of the meltblown web can be subsequently bonded together by any suitable technique to provide fabric integrity, and such results in a product known as a meltblown nonwoven web. The meltblown web and the meltblown nonwoven web can be described as a microfibrous web or microfibrous nonwoven web.

The flashspinning method provides continuous filaments obtained from a solution of polymer in a solvent which is extruded through a spinneret. As the filaments emerge from the spinneret, the solvent evaporates so rapidly that the individual filaments are disrupted into a highly fibrillar form, which are then laid down as a flashspun web. The filaments can be subsequently bonded together by any suitable technique to provide fabric integrity, and such results in a product known as a flashspun nonwoven web.

Protective fabrics, such as dust barrier fabrics are required to prevent dust particles, fluids or liquids, such as water and the like, passing through the fabric. Such protective fabrics are therefore liquid impermeable.

Desirably, such protective fabrics should be breathable, which means that air and/or liquid (or moisture) vapour, e.g. water vapour, should be able to pass through the fabric. That is to say the fabric is air and/or liquid (or moisture) vapour permeable.

The Applicant has found that nonwoven spunbond fabrics such as spunlaid nonwoven webs which are resistant to tearing and provide a high degree of air permeability, and which can be used as a single layer of fabric, are presently unsuitable as protective fabrics because the filament diameter, and resultant effective "pore" size, are too large to form an effective barrier, e.g. to fine dusts.

Currently, nonwoven protective fabrics such as those provided in industrial coveralls, are formed from microfibrous nonwoven web made using a meltblowing technique to provide fabric having sufficiently small fibre diameter and resultant effective pore size to provide an effective barrier, e.g. to fine dusts, while also retaining a high degree of air and water vapour permeability.

However, because microfibrous nonwoven webs are generally inherently weak and susceptible to tearing and possess poor abrasion properties, reinforcement by lamination with stronger fabric layers is required to provide a strong, yet suitable protective fabric.

Currently, to achieve a strong protective fabric, which resists abrasion, a microfibrous nonwoven web fabric is laminated to a spunbonded web to form a two layer fabric laminate. Alternatively, the microfibrous web may be laminated between two layers of spunbonded web to provide protection on each side of the microfibrous web.

The use of several layers of fabric in a laminate, however, adds to the number of processing steps required, increases the weight, and adds to production costs of protective fabrics.

The present invention seeks to obviate and/or mitigate at least one of the aforementioned disadvantages.

It is an object of a least one aspect of at least one embodiment of the present invention to provide a sheet material having sufficiently sized pores to provide an effective dust barrier.

This provides a particular advantage over conventional spunlaid nonwoven sheet materials such as those produced using the Reicofil® technology.

It is a further object of at least one aspect of the present invention to provide a relatively strong sheet material to resist tearing thereof.

This provides a particular advantage over microfibrous web sheet materials made using a meltblowing technique.

It is a further object of at least one aspect of the present invention to provide a sheet material having relatively improved comfort, handleability, drapability, softness and/or loft.

This provides particular advantage over flashspun nonwoven sheet materials such as those marketed under the trade name Tyvek®.

It is a further object of at least one aspect of the present invention to provide a sheet material having a relatively greater degree of opacity or "coverage".

This provides a particular advantage over conventional spunlaid nonwoven sheet materials such as those produced using the Reicofil® technology.

A further object of at least one aspect of at least one embodiment of the present invention is to provide a protective sheet material, which provides a good barrier to dust and is splash resistant or splash proof to liquids.

A further object of at least one aspect of at least one embodiment of the present invention is to provide a protective garment, which provides a good barrier to dust and is splash resistant or splash proof whilst providing a high degree of comfort to a wearer.

This provides a particular advantage over laminated protection products.

It is a further object of at least one embodiment of at least one aspect of the present invention to provide a fabric which can be used as a single layer. This provides advantageous laminate or multi-layer fabrics.

It is a further object of at least one embodiment of at least one aspect of the present invention to provide a general solution of providing a microfilamentous polymeric fabric which is advantageous over conventional spunbond fabrics, e.g. as the microfilamentous polymeric fabric has a relatively smaller diameter of microfilaments resulting in a higher density of filaments with better filament distribution. This may lead to better coverage. It may also lead to the possibility of reducing the overall weight of the fabric.

### SUMMARY OF INVENTION

According to a first aspect of the present invention there is provided a microfilamentous polymeric spunlaid or spunbond fabric, wherein the microfilaments are melt extruded and are made substantially from polypropylene, and wherein the fabric is intermittently thermally bonded and has a weight of greater than around 30 g/m².

A definition of microfilament or microfilamentous is given hereinafter.

A microfilamentous fabric may be defined as comprising microfilaments having a yarn count linear density of around 1.5 dtex or less, and preferably 1.2 dtex or less, or 1.0 dtex or less.

The term dtex means decitex and is a unit expressing the linear density as the mass in grams of a 10,000 metre length of one filament.

An alternative means of expressing the definition of a microfilamentous fabric may be by reference to fibre thickness, which is generally expressed as a fibre diameter.

The microfilaments referred to herein are distinguished from conventional spunlaid, spunlaid nonwoven or spunbonded fabric filaments in that the latter are formed as substantially continuous strands having a diameter in the region of about 17 to 20 µm or around 2 to 2.9 dtex.

The microfilaments referred to herein are distinguished from microfibres in that the microfilaments are formed as substantially continuous strands whereas microfibres are discontinuous.

The microfilaments referred to herein are distinguished from a flashspun nonwoven fabric in that the microfilaments are not prepared from a solution of polymer in a solvent which evaporates following extrusion of the solution to form highly fibrillated filaments. Rather the microfilaments are formed by a spinning bonding melt extrusion process.

According to a second aspect of the present invention there is provided a microfilamentous polymeric fabric having a weight of greater than around 15 g/m².

The fabric may be a protective fabric, e.g. against particulate material such as dust and/or liquid.

Preferably the fabric has a weight of around 20 g/m².

Preferably the fabric may have a weight of about 15 g/m² to about 150 g/m², such as about 20 g/m² or 30 g/m² to about 150 g/m².

For example the fabric may be provided in weights selected from substantially 17 g/m², 20 g/m², 25 g/m², 30 g/m², 50 g/m², 100 g/m² or 150 g/m².

Preferably, the microfilamentous polymeric fabric comprises a spunlaid fabric, which is preferably a spunlaid nonwoven or spunbonded fabric.

The fabric is typically provided as a sheet material or may be provided in any other form suitable for a particular purpose.

For example, advantageously for some uses, the fabric may be provided as a single sheet layer of fabric or, alternatively, as part of a multiple layer fabric.

A multiple layer fabric may be provided by overlaying several single layer sheets which may or may not be bonded together to provide a laminated fabric.

Alternatively, some sheets in a multiple layer fabric may be bonded together while other sheets within the same fabric may not be bonded together.

Furthermore, the sheet layers may be provided with layers of sheet materials, such as fabrics which are not microfilamentous fabrics, disposed between sheets of microfilamentous fabric and/or located on the outermost surface or surfaces of the microfilamentous fabric.

Regarding the second aspect:
microfilaments of the fabric may have been formed by melt extrusion;
the fabric may be made substantially from polypropylene;
the fabric may be intermittently thermally bonded, e.g. by calender bonding;
the fabric may have a weight of greater than around 30 g/m².

In either the first or second aspects the polymer/polypropylene may be prepared or made using a metallocene catalyst.

According to a third aspect
of the present invention there is provided an item of apparel or a garment, such as a workwear product, comprising a microfilamentous polymeric fabric.

Workwear products encompassed by the present invention include items such as coverall garments, suits, hats, gloves, masks, over-shoes and the like.

Garments may include medical garments such as modesty gowns.

The purpose of such items is to provide protection to the wearer from the environment in which they are working or otherwise placed, for example, to protect the wearer from potentially harmful substances or biological fluids, e.g. in medical/hospital environments. Alternatively or additionally, such items may protect the environment in which the wearer is working, for example, to prevent contamination from dust e.g. in clean room environments.

Microfilaments of the fabric may have a yarn count of around 1.5 dtex or less, and preferably around 1.2 dtex.

Other uses of the microfilamentous fabric include use as protective cover sheets such as medical drapes for protection of a surface covered by the protective cover from the environment, e.g. to protect the surface from liquids and/or dust. Alternatively or additionally, such protective covers may protect the environment from a surface or item beneath the cover e.g. to provide a clean surface upon which work may be carried out such as in clean room or medical/hospital environments. Protective covers may also be used to cover patients in clean environments, e.g. aseptic environments such as operating theatres.

According to a fourth aspect of the present invention there is provided an upholstery item or product or bedding item or product comprising a microfilamentous polymeric fabric.

Such upholstery items may be useful in passenger transport applications such as providing covers for seat headrests used, for example, in aircraft, trains, coaches or the like.

Bedding uses include providing mattress and pillow covers which may provide the advantage of protecting the user from allergy-causing dust, e.g. dust mites and associated debris.

According to a fifth aspect of the present invention there is provided an absorbent product, e.g. a wipe or moist/wet wipe, comprising a microfilamentous polymeric fabric.

Such absorbent products may include, for example, wipes for a variety of uses such as for taking up excess moisture from surfaces, absorption of spilt liquids and for cleaning surfaces.

The wipe may be provided without further modification of the fabric of which it is comprised.

Alternatively, the wipe may be impregnated with a substance, such as a fluid, a cleaning substance, an antibacterial agent, a surfactant, an alcohol, fragrance and/or the like.

According to a sixth aspect of the present invention there is provided a floor covering material comprising a microfilamentous polymeric fabric.

Typically, the floor covering material may be provided as a backing material for carpeting items such as carpet tiles which may comprise a bitumen component.

According to a seventh aspect of the present invention there is provided a construction product comprising a microfilamentous polymeric fabric.

Advantageously, the construction product may comprise a single layer product or alternatively, may comprise a multiple layer product.

The construction product may be suitable as a house-wrap material, such as for wall or timber frame coverage, or as a roofing material, such as an under-tile layment. Alternative uses include tarpaulins, scaffolding covers or tenting.

The construction product may include at least one further layer of microfilamentous polymeric fabric to provide a laminated product.

The construction fabric may include at least one further layer of material which is not a microfilamentous polymer fabric, such as a strengthening layer of nonwoven or woven fabric, a film layer or a membrane layer.

Typically, the construction product is air and/or liquid (moisture) vapour (e.g. water vapour) breathable or permeable.

Typically, the construction product is resistant to liquid (e.g. water) penetration or is liquid/water impermeable.

According to an eighth aspect of the present invention there is provided a geotextile comprising a microfilamentous polymeric fabric.

Such geotextile fabrics may be used, for example, in road construction or as a liner for a waste disposal site such as a landfill site.

The microfilamentous polymeric fabric provided in accordance with any of the third to eighth aspects may be a microfilamentous polymeric fabric according to the first or second aspects of the present invention.

The fibre diameter may be around 15 µm or less, for example, between about 9 µm and about 15 µm.

Preferably, the fibre diameter may be around 13 µm or less, for example, between about 11 µm and about 13 µm.

Preferably, the fibre diameter is around 11 µm.

The microfilaments typically possess a surface area of 0.35m²/g.

The microfilamentous polymeric fabric may be provided as an unbonded, i.e. spunlaid web, or as a bonded fabric, i.e. spunlaid nonwoven web or spunbonded web.

Preferably the microfilamentous polymeric fabric is provided as a bonded nonwoven fabric.

Most advantageously, polyolefin polymers may be used to form the microfilamentous polymeric fabric.

Preferred polyolefin polymers are those such as polyethylene and polypropylene.

Polypropylene is presently the most preferred polymer.

Other polymer types such as polyesters and polyamides, either singly or in combination as mixtures or as copolymers with each other and/or with the polyolefin polymers may be used to form the microfilamentous fabric.

Conventional spunlaid nonwoven fabric is typically formed using a spinlaying process in which the polymer is melted and extruded through die holes to form filaments as continuous strands which are pulled/stretched using high pressure air, and these filaments are laid down on a belt to form a spunlaid web of fabric which may then be bonded using a calender equipment.

The microfilamentous polymeric fabric of the present invention is typically also formed using a spunlaying process in which the polymer is melted and extruded through spinnerets to form filaments as continuous strands which are pulled/stretched using high pressure air to form microfilaments, and these are laid down on a belt to form a microfilamentous spunlaid web of fabric which may then be bonded using a calender equipment to form a microfilamentous spunlaid nonwoven or microfilamentous spunbonded fabric.

In order to produce microfilaments, a spunbond apparatus may operate with die holes which are smaller than those in conventional spunbond apparatus so that thinner filaments are extruded. Also the die holes may be disposed in a closer together arrangement to give more holes per unit area than that found in conventional spunlaying apparatus. Additionaly or alternatively, higher pressure air and/or air velocity may be used compared to a conventional spunlaid manufacture process.

Additionally, a polyolefin having a lower melting point and/or a narrower molecular weight distribution compared to conventional polyolefin polymer may be advantageously used in the microfilament process. This type of polyolefin may conveniently be prepared using a metallocene based catalyst, rather than a conventional Zieler-Natta catalyst, during the polymerisation process of the polyolefin monomers to form the polymer.

Such metallocene catalysed process results in a polyolefin wherein the lengths of the polymer chains in the polymer are generally of consistent comparable lengths which results in a narrower and more uniform molecular weight distribution compared to conventional polyolefin polymer prepared without a metallocene based catalyst. For example, a polyolefin prepared using a metallocene catalyst generally possesses a narrow molecular weight distribution, low atactic polymer component and reduced low molecular weight residues. Such properties can result in the polyolefin melting at a lower temperature than conventional polyolefin.

The microfilamentous nonwoven fabric includes effective pore sizes smaller than those included in conventional spunbond fabric, and therefore, provides an effective barrier to fine materials such as dust.

The bonding of the microfilamentous polymeric spunlaid fabric web to form a spunlaid nonwoven or spunbonded web may be achieved by any suitable procedure such as by means of adhesive, solvent and/or thermal bonding.

Adhesive bonding may comprise the application of discrete areas of, for example, wet adhesive or powder adhesive.

The adhesives may be activated to bond the fabric filaments by any suitable means such as by pressure or heat or a combination of these, for example, by passing the web of fabric through the nip in a calender equipment.

Advantageously, the fabric web may be bonded autogenously by subjecting the spunlaid web to heat or pressure or a combination of these. The term "autogenously" meaning that individual filaments melt and merge together, causing them to be bonded to each other.

Conveniently, such bonding may be achieved by passing the web through the nip in a calender equipment.

The bonding of the fabric web may be substantially continuous across the fabric or preferably may be intermittent, e.g. discrete bonding, such as by means of point bonding.

Continuous bonding may be conveniently provided by passing the fabric through a calender equipment provided with smooth surface calender bowls on both sides of the fabric at the nip of the calender equipment.

The calender equipment may be any of those known to the person skilled in the art, and if required modified appropriately for producing microfilamentous fabric.

Intermittent or point bonding, e.g. point emboss bonding, may comprise between about 5% and about 40% or 50% of the fabric surface area, for example, about 7.5% of the surface area.

Alternatively, the intermittent or point bonding may comprise between about 14% and about 20% of the fabric surface area, for example, about 19% of the surface area.

Point bonding may conveniently be provided by means of an appropriately configured embossed calender bowl.

Typically, a point embossed calender bowl is provided on one side of the fabric and a smooth calender bowl is provided on the other side of the fabric at the nip of the calender equipment.

The calender equipment may conveniently be provided with one smooth surfaced calender bowl and two or more differently embossed calender bowls each configured for placement with the smooth surfaced bowl at the nip of the equipment as desired to provide a choice of different emboss bond types.

The emboss points on a calender bowl may be provided in any number of configurations, such as random or repeat patterns, a repeat pattern being preferred.

The emboss points may be provided in various geometries either singly or mixed, and may be provided on a calender bowl

Typical geometries of individual emboss points may be selected from diamond, circular, elliptical and the like.

Advantageously, the microfilamentous fabric may provide a greater tensile strength when compared to conventional spunbonded fabric. Without wishing to be bound by theory, this is believed to be due at least in part to a greater orientation of the polymeric molecules within the filaments and also because a particular unit area of microfilamentous fabric comprises a greater number of filaments than in a conventional spunbonded fabric.

Advantageously, properties of the microfilamentous fabric, such as tensile strength, elongation, tear strength, drapability, softness, and the like, can be altered, and hence optimally chosen and/or selected for a particular use by making variations in the process parameters during production of the microfibrous web.

For example, a higher tensile strength fabric may be provided by applying more heat during the bonding operation when the fabric web is passed through a calender nip. Alternatively, a softer fabric, having a lower tensile strength, may be provided by applying less heat during the bonding operation. Advantageously, in some applications, e.g. in bedding products, a less strong fabric is required, contrary to expectation, because this actually may increase the tear strength of the fabric which is important in such uses, and this is beneficial because importantly, the maintenance of a soft fabric is also achieved in this manner which is also important in such uses. Such fabric may be provided by reducing the amount of heat applied to the fabric during the bonding process.

These and other properties may also be altered by variations in the amount of bonding applied to the fabric. For example a low degree of bonding such as a 7.5 % point bonding may provide advantageous properties such as a greater degree of entrained air within the filaments of the microfilamentous fabric.

Additives may be added to the polymer melt prior to extrusion and these additives may be selected from hydrophobic agents, hydrophilic agents, flame retardants, UV stabilisers, thermal stabilisers, colour pigments and the like.

Additionally, or alternatively, agents may be applied topically to the resultant microfilamentous fabric, such agents being chosen from anti-static, antimicrobial or flame retardant agents, which are desirably provided as flame retardant coating agents.

According to a ninth aspect of the present invention there is provided an item of apparel or garment such as a workwear product, comprising a single layer of microfilamentous polymeric fabric.

According to a tenth aspect of the present invention there is provided an upholstery item or product, a bedding item or product, an absorbent product, a floor covering material, a construction product or a geotextile, comprising a single layer of microfilamentous polymeric fabric.

According to an eleventh aspect of the present invention there is provided use of a microfilamentous polymeric fabric in the manufacture of an item of apparel or garment, such as a workwear product.

According to a twelfth aspect of the present invention there is provided use of a microfilamentous polymeric fabric in the manufacture of an upholstery item or product, a bedding item or product, an absorbent product, a floor covering material, a construction product or a geotextile.

### BRIEF DESCRIPTION OF DRAWINGS

Embodiments of the present invention will now be described, by way of example only, and with reference to the following drawings which are:
- **Figure 1**: a top view of a portion of conventional spunbonded fabric at a magnification of x40;
- **Figure 2**: a top view of a portion of microfilamentous spunbonded fabric according to the present invention at a magnification of x40;
- **Figure 3**: a schematic diagram showing a microfilamentous spunbonded fabric manufacturing process; and
- **Figure 4**: a front view of a protective coverall garment according to the present invention.

### DETAILED DESCRIPTION

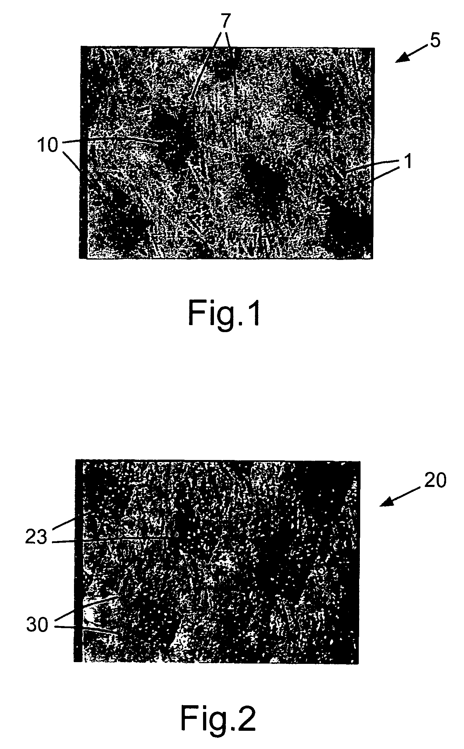

Referring to Figure 1, it can be seen that conventional spunbonded fibres 1 in a fabric 5 comprising a spunbonded web are continuous. Calender diamond embossed bond points 10 can be seen at regular intervals. The fibres 1 in the fabric 5 can be clearly seen and form a relatively open porous structure, "pores" 7 being clearly visible. It will be appreciated that herein the fabric provides circuitous pathways provided by the tangled web of filaments. Such pathways effectively work as pores or micropores.

In contrast, Figure 2 shows a microfilamentous spunbonded fabric 20 in accordance with an embodiment of the present invention which is calendared with diamond emboss points 23. Microfilaments 30 of the fabric 20 have an approximate diameter of 13 µm and appear visually thinner than the fibres 1 of the conventional spunbond fabric 5 shown in Figure 1. "Pores" 7 in the microfilamentous fabric 20 are much smaller than in the conventional fabric 5 and cannot be clearly seen at the magnification level of Figure 2.

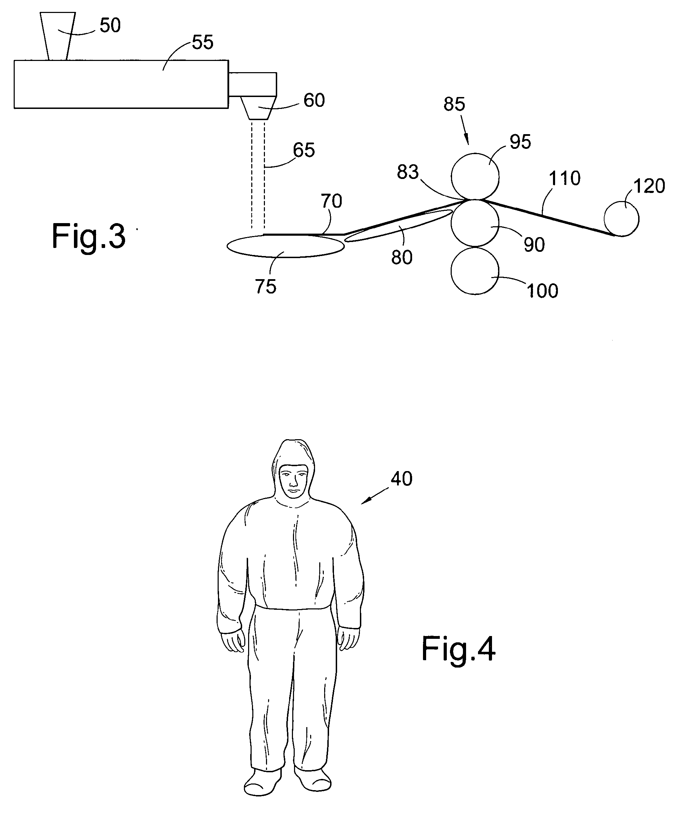

A process for producing a microfilamentous spunbonded web or fabric, such as fabric 20, is shown schematically in Figure 3. The microfilamentous web is advantageously manufactured by using a polyolefin prepared using a metallocene based catalyst in the polymerisation process.

The polyolefin, which in this embodiment is polypropylene, is fed into an extruder hopper 50. Additives, such as hydrophobic agents, hydrophilic agents, flame retardants, UV stabilisers, thermal stabilisers, colour pigments etc. may also be added to the hopper 50 to provide particular desired properties to the resultant microfilamentous fabric.

The polypropylene (with or without additives) is fed from the hopper 50 into a melt extruder 55 where the polypropylene is melted and fed via a melt pump into a filament spinning beam 60 comprising a die block containing a multiplicity of die holes through which the polyolefin melt passes. Two or more extruders and associated spinning beams may be provided if desired for increasing the output production of fabric or for providing a fabric having several web layers, albeit with the filaments from each layer being somewhat intermingled together to provide a degree of integrity to the layered product. For example, several extruders and spinning beams may be provided "in line" which means that the multiple layer microfilamentous fabric is produced by simultaneous extrusion from the several extruders, rather than by subsequent layering ("off line").

The polypropylene used herein melts at 153°C which is a lower temperature than the melting point or melting temperature of conventional polypropylene which melts at 163°C. Without wishing to be bound by theory, the lower melting temperature appears to be caused by a narrower molecular weight distribution in polypropylene prepared using a metallocene catalyst than conventional polypropylene not prepared with a metallocene catalyst.

The resulting microfilaments 65 are then quenched by high pressure air resulting in a somewhat unconsolidated unbonded web 70 of solidified polypropylene microfilaments deposited onto a spinbelt 75. The unbonded web 70 is fed by a conveyor belt 80 into the nip 83 of a calender bonding apparatus 85 which comprises a smooth bowl 90 and an engraved bowl 95 which has an emboss pattern, e.g. point emboss pattern, engraved thereon. An alternative engraved bowl 100 having a different emboss pattern, e.g. point emboss pattern, thereon can also be provided in the calender apparatus to allow a choice of emboss pattern by altering the path of the unbonded web by passing it between bowls 100 and 90 instead.

In this apparatus, emboss bowl 95 is engraved with diamond emboss points in a pattern giving a 19% surface area emboss bonding to web 70, and alternative emboss bowl 100 is engraved with round emboss points in a pattern giving a 7.5% surface area emboss bonding to web 70.

The emboss pattern may comprise emboss points having a diamond, round or any other shaped geometry. The emboss pattern points may also cover from 7% to 40% or 50% of the surface of the emboss calender bowl 95, 100 resulting in a correspondingly point bonded fabric.

The resultant microfilamentous spunbonded fabric 110 is then wound-up on a roller 120 for storage.

A single layer microfilamentous fabric prepared according to the process of Figure 3 was subjected to a number of tests and compared to: conventional single layer spunbonded fabric, and to a conventional laminate of single layer spunbonded fabric laminated to a single layer microfibrous meltblown fabric, as indicated below.

The filament denier and diameter of the filaments in the microfilamentous polypropylene spunbond fabric and a conventional polypropylene spunbonded fabric were measured. The results are shown in Table 1, which show that the microfilaments are almost twice as fine as conventional spunbond filaments.

**Table 1: Filament diameters**

| | | |
|---|---|---|
| Conventional polypropylene spunbond | 2.5 denier | 20 µm diameter |
| Microfilamentous spunbond | 1.0 denier | 13 µm diameter |

The fibre surface area per square metre of fabric was measured for three different fabric weights for both conventional polypropylene spunbond and microfilamentous polypropylene spunbond. The results are shown in Table 2.

**Table 2: Surface area measurements**

| | Filament surface area (m²) for every 1 m² of fabric | | |
|---|---|---|---|
| Fabric weight | 17g/m² | 30g/m² | 50g/m² |
| Conventional polypropylene spunbond | 3.8 | 6.8 | 11.3 |
| Microfilamentous spunbond | 5.9 | 10.5 | 17.5 |

From the results in Table 2, it can be calculated that the surface area of the microfilaments is approximately 0.35m² per gram of filament weight.

The opacity of the fabrics was compared visually, and it was concluded that the 17g/m² microfilamentous spunbond was more opaque than the 30g/m² conventional polypropylene spunbond, and the 30g/m² microfilamentous spunbond was more opaque than the 50g/m² conventional polypropylene spunbond.

Table 2 shows that the surface area of the microfilamentous spunbond is very similar to, and is actually less than, that of the conventional polypropylene spunbond with an equivalent opacity, i.e. 17g/m² microfilamentous compared to a 30g/m² conventional spunbond and a 30g/m² microfilamentous compared to a 50g/m² conventional spunbond.

It can also be concluded that, for a particular fabric weight, the microfilamentous spunbond has a greater than 50% higher filament surface area than that of conventional polypropylene spunbond.

The tensile strength of several fabrics was measured and the results are shown in Tables 3 and 4.

**Table 3: Tensile strengths of conventional polypropylene spunbond and microfilamentous spunbond.**

| | Tensile strength in the machine direction (N) | | |
|---|---|---|---|
| Fabric weight | 17g/m² | 30g/m² | 50g/m² |
| Conventional polypropylene spunbond | 45 | 90 | 160 |
| Microfilamentous Spunbond | Up to 65 | Up to 122 | Up to 174 |

**Table 4: Tensile strengths of microfilamentous spunbond and a conventional spunbond/microfibrous meltblown two layer laminate (SM).**

| Fabric weight & Fabric type | Units | Machine Direction | Cross Direction |
|---|---|---|---|
| 30g/m² microfilamentous spunbond | N/50mm | 130 | 76 |
| 50g/m² microfilamentous spunbond | N/50mm | 161 | 97 |
| Typical 48g/m² SM laminate | N/50mm | 95 | 70 |

The results shown in Table 4 indicate that the tensile strength of the single layer filamentous spunbonded fabric is superior to a prior art two layer spunbond/microfibrous meltblown (SM) laminate.

The hydrostatic head was measured and compared for several fabrics and the results are shown in Table 5.

**Table 5: Hydrostatic head values**

| | Hydrostatic Head (cm) | | |
|---|---|---|---|
| Fabric weight | 50g/m² | 100g/m² | 150g/m² |
| Conventional polypropylene Spunbond | 22 | 28 | 38 |
| Microfilamentous spunbond | 34 | 48 | a |

| | | | |
|---|---|---|---|
| a - 150g/m² microfilamentous spunbond was not made. | | | |

The results in Table 5 show that a 50g/m² weight microfilamentous spunbonded fabric has a hydrostatic head value almost equivalent to a conventional polypropylene spunbonded fabric of 150g/m² weight.

The value of 48 for the 100g/m² weight microfilamentous spunbond could not be achieved at all with a conventional polypropylene spunbonded fabric.

The air permeability was measured for a number of fabrics and the results are shown in Table 6.

The results in Table 6 show that the air permeability of a 17g/m² microfilamentous spunbonded fabric is substantially lower than that of a conventional spunbonded fabric of 50g/m² weight.

**Table 6: Air permeability**

| | Air Permeability (ml/cm²/sec) | | |
|---|---|---|---|
| Fabric weight | 17g/m² | 30g/m² | 50/m² |
| Conventional polypropylene spunbond | 137 | 70 | 63 |
| Microfilamentous spunbond | 40 | 24 | 21 |

The results indicate that the air permeability of a microfilamentous spunbonded fabric is approximately 70% lower than that of an equivalent weight of conventional spunbond.

The dust barrier properties of the microfilamentous polypropylene spunbonded fabric were tested and compared to the dust barrier properties of a conventional SM two layer laminate. The test method used was the Aloxite particle barrier test for a CEN category 3, Type 5 coverall suit, as defined in document CEN TC162 WG3 TG3 N77 "Determination of resistance of suits to penetration by aerosols and fine particles". The results are shown in Table 7.

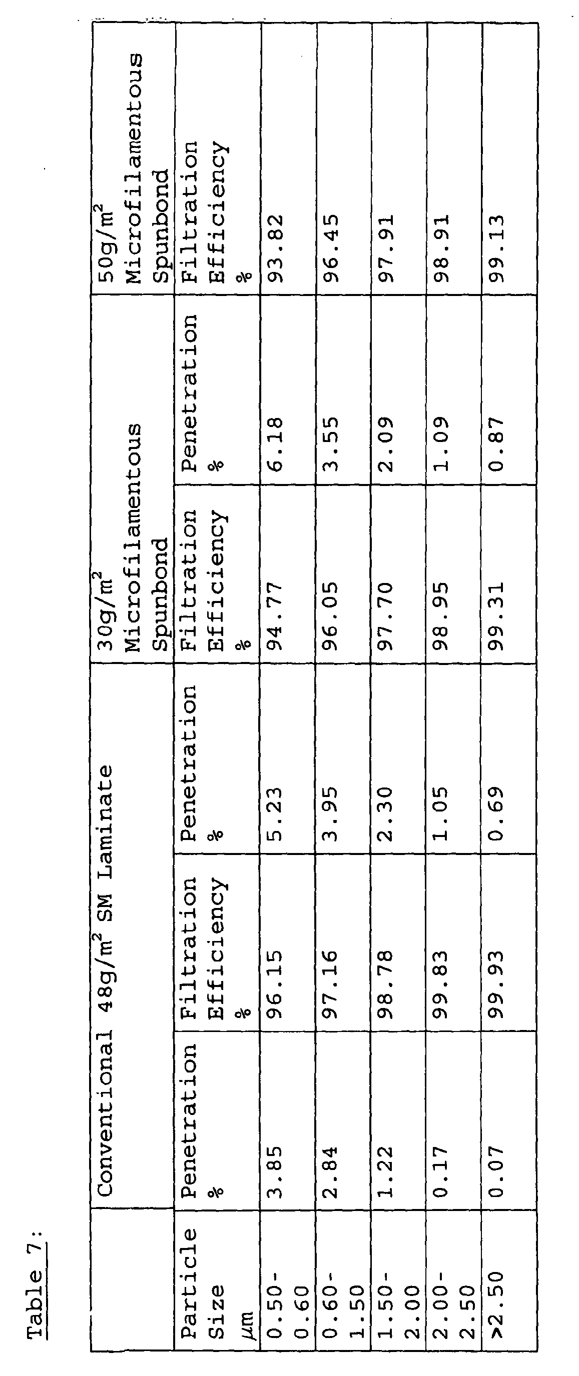

The percentage penetration in the 2 µm - 2.5 µm range was 1.09% for the microfilamentous spunbond fabric, which is well within the limit of >10% required by test standards. This result compares favourably to the conventional 48g/m² spunbond-meltblown (SM) two layer laminate workwear fabric currently available.

### Example 1

Figure 4 shows an example of a protective product in the form of a coverall garment 40 according to an embodiment of the present invention. The garment 40 covers the torso, legs, arms and head of the wearer and provides effective protection whilst allowing passage of air and water vapour through the garment 40. The garment 40 is formed from a single layer of the microfilamentous fabric 20 described hereinbefore and described with reference to Figures 2 and 3.

The dust barrier properties of such fabric 20 are very similar to a microfibrous fabric produced by a meltblown technique, but the fabric 20 possesses greater strength characteristics than a microfibrous fabric allowing the microfilamentous fabric 20 to be used as a single layer fabric, without the need for reinforcement layer(s) in a laminate structure.

The results provided above for fabric 20 indicate that a single layer microfilamentous spunbonded fabric is sufficient in several properties for use in workwear garments, without the need for additional lamination to further fabric layers.

A further example of a garment according to an embodiment of the present invention is a gown, for use in medical/hospital environments for a worker to wear, such as a surgeon working in aseptic environments, such as operating theatres.

A further example of a garment according to an embodiment of the present invention is a modesty gown for a patient to wear in a clinical or hospital environment.

According to embodiments of the present invention covers and drapes can also be provided in those environments using the inventive fabric.

### Example 2

The use of microfilamentous fabric 20 as a cover, e.g. for seat headrests, is particularly beneficial because the fabric is of a lighter weight, so that for use in aircraft the weight for take off and flight is reduced. Additionally, the fabric has a smoother or less hairy surface which provides a conceptually higher quality fabric to the user. Furthermore, the greater surface area of the microfilamentous fabric and/or the smoother surface allows for better surface printing with ink and dye substances to provide a coloured, patterned and/or message/promotional material to be provided on the seat headrest cover.

In particular, by altering/selecting the bonding conditions during production of the microfilamentous fabric web, for example, such that less heat is used to bond the filaments together during the calendering process, a fabric having less tensile strength and a softer feel is provided which is beneficial to seat headrest use wherein users contact the fabric, e.g. against the skin. In particular, such fabric may be provided by choosing a low degree of bonding during the manufacture process of the fabric, for example, by use of a calender bowl embossed with circular emboss points which comprise 7.5% of the calender surface.

### Example 3

Use of a microfilamentous fabric 20 in furniture upholstery such as a cover for beds is beneficial due to the superior filtration properties of the fabric. Such covers may be used to cover mattresses, pillows, cushions and the like. Thus anti-allergy coverings can be provided, which may comprise a single layer of microfilamentous fabric or a multiple layer or laminated product, e.g. with a microfibrous web of fabric. Compared to conventional spunbonded fabric, the lower weight of microfilamentous fabric per unit area enables the weight of a laminate product to be maintained whilst increasing the filtration ability of the product. Additionally, by altering/selecting the bonding conditions during production of the microfilamentous fabric web, for example, such that less heat is used to bond the filaments together during the calendering process, a fabric having less tensile strength and a softer feel is provided. Such is beneficial for use in furniture and bedding applications. In particular, by providing a fabric with less tensile strength, in such uses, the fabric is less prone to tearing.

Thus, by selecting processing conditions during or after microfilamentous fabric manufacture, properties of the fabric, such as tensile strength, softness, drapability and the like can be altered/selected to be suitable for a particular use of the fabric.

### Example 4

Use of a microfilamentous fabric 20 as a component in an absorption product provides a further use of such fabric because a soft fabric having a relatively high bulk, i.e. entrapped air, can be provided whilst maintaining a relatively low weight for the product. In particular, such fabric may be provided by choosing a low degree of bonding during the manufacture process of the fabric, for example, by use of a calender bowl embossed with circular emboss points which comprise 7.5% of the calender surface.

The absorbent product, e.g. wipe, may be provided in a dry state or in a wet state, and may be impregnated with various substances such as skin cleansing products, antibacterial agents, surfactants, detergents, alcohol, fragrances and the like. Such wipes can be used in a variety of ways, for example, for absorbing spilt liquids, wiping excess moisture from surfaces, cleaning surfaces, skin cleansers, e.g. for make-up removal, or as baby wipes or wet wipes and the like.

The greater surface area per unit weight of microfilamentous fabric is particularly advantageous for use as a wipe product for providing an increased contact area with the surface being wiped and a correspondingly improved wipe performance.

### Example 5

The relatively high density of filaments and small pore sizes in a microfilamentous fabric 20 is advantageous in providing a backing material, e.g. for floor covering tiles which are prepared using coating products such as bitumen. The bitumen is less able to penetrate through the microfilamentous fabric during the carpet tile backing process during their manufacture. It has been found that the lower the air permeability of the microfilamentous fabric, the less the bitumen is able to penetrate the fabric. The penetration effect may be termed bitumen strike through.

A 17 g/m² weight microfilamentous fabric was found to have a considerably lower air permeability than a 50 g/m² weight conventional spunbonded fabric, and the lighter weight microfilamentous fabric was shown to have superior bitumen strike through performance. All of the microfilamentous fabric samples tested were shown to pass laboratory carpet tile shrinkage tests.

### Example 6

Microfilamentous fabric 20 may be used to replace conventional construction products such as roofing products, e.g. roof tile underlay, and house wrap, e.g. wall covering products, as well as tarpaulins, scaffolding covers, tenting and the like.

Compared to a conventional spunbonded fabric, a single layer microfilamentous product has a lower degree of breathability, albeit it is still highly breathable, and it possesses increased water holdout properties. A single layer of microfilamentous fabric may therefore be used in some instances instead of a laminated construction product, particularly in situations where existing products show compromised water holdout, or do not achieve the required water holdout for particular uses.

Additionally, a microfilamentous fabric may be used to enhance the properties of laminated construction products. For example, it may be used to replace conventional spunbonded fabric layer(s) presently used to provide strength to membrane or film layers and beneficially protect such from detrimental effects of ultra violet radiation due to exposure to sunlight. The greater degree of opacity and coverage provided by a microfilamentous fabric is particularly advantageous in this application, particularly because a greater surface area is provided compared to the equivalent weight per unit area of fabric for a conventional spunbonded fabric.

Also, the microfilamentous fabric may be provided as a substrate such that it is coated, for example, with a polymer or other curable substance, to provide an alternative construction product.

### Example 7

The increased tensile strength properties of the microfilamentous polymeric fabric 20 compared to other sheet fabric materials provides suitability for use as a geotextile product, such as a liner for use in road laying or in outside land fill waste disposal sites. For example, the fabric can be coated with any suitable material, e.g. a polymeric substance such as a thermoplastic polymer, or curable polymer, curable elastomeric substance, rubber, or rubber-like substance, or the like, to provide a sheet of geotextile material. A laminate product may also be provided with layers comprising conventional spunbonded fabric, other nonwoven fabrics and woven fabrics.

The foregoing embodiments of the present invention are not to be considered as limiting thereof, and various other advantages, uses and modifications which take advantage of the properties of a microfilamentous fabric may be envisaged within the scope of the present invention.

For example, a microfilamentous fabric by suitable substitution, can provide lighter weight materials with maintained or improved properties. For example, the higher tenacity of microfilamentous fabric is particularly beneficial. Additionally, the filaments in a microfilamentous fabric may be more evenly deposited to provide a fabric with a more uniform appearance, rather than some regions of a fabric having a greater density of filaments than other regions of the same fabric. Thus, a more uniformly distributed lighter weight filamentous fabric is provided, which may be important in lighter weight laminate fabric production.

## Claims

1. A microfilamentous polymeric spunlaid or spunbond fabric, wherein microfilaments of the fabric are melt extruded and are made substantially from polypropylene, and wherein the fabric is intermittently thermally bonded and has a weight of greater than around 30 g/m².

2. A fabric as claimed in claim 1, wherein the fabric has a weight of about 30 g/m² to about 150 g/m².

3. A fabric as claimed in either of claims 1 or 2, wherein the fabric has a weight selected from substantially 30 g/m², 50 g/m², 100 g/m² or 150 g/m².

4. A microfilamentous polymeric fabric having a weight of greater than around 15 g/m².

5. A fabric as claim in any of claims 1 to 3 or claim 4, wherein the fabric is a protective fabric adapted to protect against particulate material such as dust and/or liquid.

6. A fabric as claimed in claim 4, wherein the fabric has a weight of around 20 g/m².

7. A fabric as claimed in claim 4, wherein the fabric has a weight of about 15 g/m² to about 150 g/m², about 20 g/m² to 150 g/m2, or 30 g/m² to about 150 g/m².

8. A fabric as claimed in claim 4, wherein the fabric has a weight selected from substantially 17 g/m², 20 g/m², 25 g/m², 30 g/m², 50 g/m², 100 g/m² or 150 g/m².

9. A fabric as claimed in claim 4, wherein the microfilamentous polymeric fabric comprises a spunlaid fabric, which is a spunlaid nonwoven or spunbonded fabric.

10. A fabric as claimed in any of claims 1 to 3 or claims 4 to 9, wherein the fabric is provided as a single sheet layer of fabric.

11. A fabric as claimed in any of claims 1 to 3 or claims 4 to 9, wherein the fabric is provided as part of a multiple layer fabric.

12. A fabric as claimed in claim 11, wherein the multiple layer fabric is provided by overlaying a plurality of single layer sheets which are or are not bonded together to provide a laminated fabric.

13. A fabric as claimed in claim 11, wherein some sheets in the multiple layer fabric are bonded together while other sheets within the same fabric are not bonded together.

14. A fabric as claimed in any of claims 11 to 13, wherein the sheet layers are provided with layers of sheet material, which are optionally fabrics which are not microfilamentous fabrics, disposed between sheets of microfilamentous fabric and/or located on an outermost surface or surfaces of the microfilamentous fabric.

15. A fabric as claimed in any of claims 4 or claims 5 to 14 when dependent upon claim 4, wherein microfilaments of the fabric have been melt extruded.

16. A fabric as claimed in any of claims 4 or claims 5 to 15 when dependent upon claim 4, wherein the fabric is made substantially from polypropylene.

17. A fabric as claimed in any of claims 4 or claims 5 to 16 when dependent upon claim 4, wherein the fabric is intermittently thermally bonded such as by calender bonding.

18. A fabric as claimed in any of claims 4 or claims 5 to 17, wherein the fabric has a weight greater than around 30 g/m².

19. A fabric as claimed in any of claims 1 to 3 or clams 4 to 18, wherein the polymer/polypropylene was prepared or made with a metallocene catalyst.

20. An item of apparel or a garment, such as a workwear product, comprising a microfilamentous polymeric fabric such as a fabric as claimed in any of claims 1 to 3 or claims 4 to 19.

21. An item of apparel or a garment as claimed in claim 20, wherein the item or garment is selected from a coverall garment, a suit, a hat, gloves, a mask or over-shoes.

22. An item of apparel or a garment as claimed in claim 20, wherein the garment comprises a medical garment such as a modesty gown.

23. An item of apparel or a garment as claimed in any of claims 20 to 22, wherein the item or garment protects a wearer from an environment in which the wearer is located, and/or the item or garment protects the environment from the wearer.

24. A protective cover sheet, such as a medical drape, comprising a microfilamentous fabric as claimed in any of claims 1 to 3 or claims 4 to 19.

25. An upholstery item or product or bedding item or product comprising a microfilamentous polymeric fabric such as a fabric as claimed in any of claims 1 to 3 or claims 4 to 19.

26. An upholstery item or product or bedding item or product as claimed in claim 25, wherein the item or product is adapted for use in passenger transport applications such as a seat headrest.

27. An upholstery item or product or bedding item or product as claimed in claim 25, wherein the item or product is a mattress cover or pillow cover.

28. A floor covering material comprising a microfilamentous polymeric fabric such as a fabric as claimed in any of claims 1 to 3 or claims 4 to 19.

29. A floor covering as claimed in claim 28, wherein the floor covering material is provided as a backing material for carpeting items such as carpet tiles, which optionally comprise a bitumen component.

30. A construction product comprising a microfilamentous polymeric fabric such as a fabric as claimed in any of claims 1 to 3 or claims 4 to 19.

31. A construction product as claimed in claim 30, wherein the construction product comprises a single layer product or a multiple layer product.

32. A construction product as claimed in either of claims 30 or 31, wherein the construction product is adapted for use as a house wrap material, such as for wall or timber frame coverage, or as a roofing material, such as an under tile layment.

33. A construction product as claimed in either of claims 30 or 31, wherein the construction product is adapted for use as a tarpaulin, scaffolding cover or in tenting.

34. A construction product as claimed in any of claims 30 to 33, wherein the construction product includes at least one further layer of microfilamentous polymeric fabric to provide a laminated product.

35. A construction product as claimed in any of claims 30 to 34, wherein the construction product includes at least one further layer of material which is not a microfilamentous polymer fabric, such as a strengthening layer of nonwoven or woven fabric, a film layer or a membrane layer.

36. A construction product as claimed in any of claims 30 to 35, wherein the construction product is liquid/water impermeable.

37. A construction product as claimed in any of claims 30 to 36, wherein the construction product is air and/or liquid vapour permeable.

38. A construction product as claimed in any of claims 1 to 3 or claims 4 to 19, wherein the microfilamentous fabric comprises microfilaments having a yarn count linear density of around 1.5 dtex or less, 1.2 dtex or less, or 1.0 dtex or less, a dtex being the linear density expressed as the mass in grams of a 10,000 metre length of one filament.

39. A construction product as claimed in any of claims 1 to 3 or claims 4 to 19, wherein the microfilamentous fabric comprises a plurality of fibres or filaments, the fibre or filament diameter being around 15 µm or less.

40. A construction product as claimed in claim 39, wherein the fibre diameter is between about 9 µm and about 15 µm.

41. A construction product as claimed in claim 39, wherein the fibre diameter is around 13 µm or less.

42. A construction product as claims in claim 39, wherein the fibre diameter is around 11 µm.

43. A construction product as claimed in any of claims 1 to 3, claims 4 to 19, or claims 38 to 42, wherein the microfilaments have a surface area of around 0.35m²/g.

44. A construction product as claimed in any of claims 1 to 7, 4 to 19, or claims 38 to 43, wherein the fabric is provided as an unbonded spunlaid web, or as a bonded fabric, spunlaid nonwoven web, or spunbonded web.

45. A construction product as claimed in claim 4, wherein the polymer(s) used to form the microfilamentous polymeric fabric is/are selected from polyethylene, polypropylene, polyesters and polyamides, either singly or in combination as mixtures or as copolymers with each other.

46. A construction product as claimed in any of claims 1 to 3, claims 4 to 19 or claims 38 to 45, wherein the microfilamentous polymeric fabric is formed using a spunlaying process in which the polymer(s) is/are melted and extruded through spinnerets to form filaments as continuous strands which are pulled/stretched using high pressure air to form microfilaments, which are laid down on a belt to form a microfilamentous spunlaid web of fabric which is then bonded using a calender equipment to form a microfilamentous spunlaid nonwoven or microfilamentous spunbonded fabric.

47. A construction product as claimed in any of claims 1 to 3, claims 4 to 19, or claims 38 to 46, wherein a polyolefin of the fabric is prepared using a metallocene based catalyst.

48. A construction product as claimed in any of claims 1 to 3, claims 4 to 19, or claims 38 to 47, wherein bonding of a microfilamentous polymeric spunlaid fabric web to form the fabric is achieved by means of adhesive, solvent and/or thermal bonding.

49. A construction product as claimed in claim 48, wherein a spunlaid web of the fabric is bonded autogenously by subjecting the spunlaid web to heat and/or pressure.

50. A construction product as claimed in claim 49, wherein the bonding is achieved by passing the spunlaid web through a nip of a calender equipment.

51. A construction product as claimed in any of claims 48 to 50, where the bonding is provided substantially continuous across the fabric or is intermittent, such as point bonding.

52. A construction product as claimed in claim 51, wherein intermittent or point bonding comprises between about 5% and about 40% or 50% of the fabric surface area.

53. A construction product as claimed in claim 51, wherein the intermittent or point bonding comprises between 14% and about 20% of the fabric surface area.

54. A construction product as claimed in any of claims 51 to 53, wherein individual emboss points are shaped as diamonds, circles, ellipses, or ovals.

55. An item of apparel or garment such as a workwear product, comprising a single layer of microfilamentous polymeric fabric, such as a fabric as claimed in any of claims 1 to 3, claims 4 to 19, or claims 38 to 54.

56. An upholstery item or product, a bedding item or product, an absorbent product, a floor covering material, or a construction product, comprising a single layer of microfilamentous polymeric fabric, such as a fabric as claimed in any of claims 1 to 3, claims 4 to 19, or claims 38 to 54.

57. Use of a microfilamentous polymeric fabric such as a fabric as claimed in any of claims 1 to 3, claims 4 to 19, or claims 38 to 54 in the manufacture of an item of apparel or garment, such as a workwear product.

58. Use of a microfilament polymeric fabric, such as a fabric as claimed in any of claims 1 to 3, claims 4 to 19, or claims 38 to 54 in the manufacture of an upholstery item or product, a bedding item or product, an absorbent product, a floor covering material, or a construction product.
